# NEUE EUROPÄISCHE PATENTSCHRIFT

(11) **EP 0 264 068 B2**
(45) Veröffentlichungstag und Bekanntmachung des Hinweises auf die Entscheidung über den Einspruch: **15.07.1998**
(45) Hinweis auf die Patenterteilung: 29.04.1992
(21) Anmeldenummer: 87114706.2
(22) Anmeldetag: 08.10.1987
(51) Int. Cl.: H04N 5/782, H04N 7/087

(54) **Programmierbarer Audio- oder Videorecorder**
Programmable audio or video recorder
Enregistreur audio ou vidéo programmable

(30) Priorität: 11.10.1986 DE 3634750; 29.01.1987 DE 3702551
(43) Veröffentlichungstag der Anmeldung: 20.04.1988
(73) Patentinhaber: Deutsche Thomson-Brandt GmbH, 78003 Villingen-Schwenningen (DE)
(72) Erfinder: Wippermann, Horst, Dipl.-Ing., D-3017 Pattensen (DE); Gessler, Hans-Jörg, Dipl.-Phys., D-Hemmingen 1 (DE)
(74) Vertreter: Einsel, Robert, Dipl.-Ing.

(56) Entgegenhaltungen:
- EP-A- 0 118 104
- EP-A- 0 122 626
- EP-A- 0 133 985
- DE-A- 3 512 156
- RUNDFUNKTECHNISCHE MITTEILUNGEN, Band 29, Nr. 4, Juli/August 1985, Seiten 161-169, Norderstedt, DE; A. HELLER: "VPS - Ein neues System zur Beitragsgesteuerten Programmaufzeichnung"
- IRT: "Video-Programm-System (VPS)" Technische Richtlinie ARD/ZDF, Nr. 8 R 2, Hrsg. IRT, München, Dezember 1984

## Beschreibung

Die Erfindung betrifft einen programmierbaren Audio- oder Videorecorder nach dem Oberbegriff des Anspruchs 1.

Bei Recordern der eingangs genannten Art ist es bekannt, für automatischen Aufzeichnungsbetrieb die Startzeit, die Dauer und/oder die Stopzeit eines gewünschten Aufzeichnungsauftrages oder Sendebeitrages manuell in einen sogenannten Timer-Speicher des Recorders einzugeben. Das Aktivieren und/oder Beenden eines solchen zeitgesteuerten Aufzeichnungsbetriebes des Recorders erfolgt dabei durch eine Echtzeituhr.

Diese Lösung hat den Nachteil, daß bei einem verspätet beginnenden Sendebeitrag das Einschalten zu früh erfolgt und am Ende der Aufzeichnung ein Teil des Sendebeitrages fehlt.

Diese Nachteile können durch das in Deutschland kürzlich eingeführte Video-Programm-System (VPS) vermieden werden. Für Hörfunksendungen sind vergleichbare Verfahren unter der Bezeichnung Radio-Daten-System (RDS) bekannt. Dabei wird in beiden Fällen zu jedem Sendebeitrag ein diesen Sendebeitrag charakterisierendes Kennsignal übertragen, das sogenannte VPS- bzw. RDS-Signal, das auf der Empfangsseite mit einer vom Benutzer programmierten Kennung verglichen wird. Bei übereinstimmung wird eine Schaltspannung erzeugt, die dadurch genau zum tatsächlichen Start-Zeitpunkt des Sendebeitrages das Empfangsgerät genau für die tatsächliche Zeitdauer des Sendebeitrages einschaltet. Wenn der gewünschte Sendebeitrag beispielsweise um 20.00 Uhr beginnen soll, sich jedoch aus aktuellem Anlaß verschiebt, wird auch das Einschalten des Empfangsgerätes für den gewünschten Sendebeitrag entsprechend verzögert. Beginnt dann schließlich um 20.30 Uhr die ursprünglich für 20.00 Uhr vorgesehene Sendung, so wird diese dann genau während ihrer tatsächlichen Zeitdauer empfangen und/oder aufgezeichnet.

Im Zusammenhang mit der Einführung von VPS sind zwar Recorder vorgeschlagen worden (vgl. RUNDFUNKTECHNlSCNE MITTEILUNGEN, Band 29, Nr. 4, Juli/August 1985, Seiten 161 - 169), die je nach An- oder Abwesenheit des Kennsignals automatisch auf Beitrags- oder Schaltuhrsteuerung umschalten können sollen. Damit sollte erreicht werden, daß solche Recorder unabhängig davon einsetzbar wären, ob der den jeweils gewünschten Sendebeitrag ausstrahlende Rundfunksender bereits auf die Ausstrahlung von charakterisierenden Kennsignalen umgerüstet war oder noch nicht. Ferner sollte in "Havariefällen" automatisch die Schaltuhrsteuerung an die Stelle der Kennsignalsteuerung treten.

Im Praxisbetrieb ist es inzwischen immer wieder vorgekommen, daß ein mit einem Kennsignal gesteuerter Aufzeichnungsbetrieb während eines Sendebeitrages vorzeitig abgebrochen wurden. Die Gründe lagen teilweise senderseitig an einem unbeabsichtigten, vorzeitigen Ab- oder Umschalten des Kennsignals, teilweise war es zu Störungen oder Reflexionen innerhalb des Übertragungsweges gekommen. Teilweise konnten die Ursachen für dieses Abbrechen nicht ermittelt werden.

Der Erfindung liegt die Aufgabe zugrunde, ein Einschalten des Recorders zum tatsächlichen Beginn eines Sendebeitrages zu ermöglichen und unerwünschtes Abschalten bei später auftretender Störung des Kennsignals weitgehend zu vermeiden.

Diese Aufgabe wird durch die im Anspruch 1 beschriebene Erfindung gelöst. Vorteilhafte Weiterbildungen der Erfindung sind in den Unteransprüchen beschrieben.

Der Aufzeichnungsbetrieb kann also vorteilhaft sendergesteuert durch das Kennsignal gestartet werden. Somit wird der Recorder zum Zeitpunkt des tatsächlichen Beginns des gewünschten Sendebeitrages eingeschaltet.

Bei einer Weiterbildung gemäß der Erfindung wird unmittelbar oder kurz - z.B. einige Sekunden - nach diesem Einschalten selbsttätig auf mittels einer Echtzeituhr zeitgesteuerten Aufzeichnungsbetrieb umgeschaltet. Das Kennsignal ist dann für die restliche Dauer dieses Aufzeichnungsauftrages ohne Einfluß. Störungen oder Wegfall des Kennsignals können nun den Aufzeichnungsbetrieb nicht mehr beeinträchtigen.

Bei Vorliegen der zeitgesteuerten Aufzeichnungsbetriebsart erfolgt das Abschalten des Aufzeichnungsbetriebes gemäß einer Ausgestaltung der Erfindung entsprechend der Soll-Zeitdauer des Aufzeichnungsauftrages oder entsprechend der Soll-Stopzeit des Aufzeichnungsauftrages oder auch zu einem beliebig vorgebbaren Zeitpunkt. Der beliebig wählbare Zeitpunkt ist dann sinnvoll, wenn die Dauer des Sendebeitrages nicht absehrbar ist oder der Bedienende nach eigenem Ermessen eine ausreichend lange Aufnahmezeitdauer einzustellen wünscht.

Weitere Vorteile, Merkmale und Einzelheiten der Erfindung werden im folgenden an zwei Ausführungsbeispielen anhand der Zeichnung erläutert. Darin zeigen
- Fig. 1: im Prinzip einen Recorder mit einer ersten erfindungsgemäßen Maßnahme,
- Fig. 2: ein Zeitdiagramm für den Ablauf der Betriebsarten des Recorders in Fig. 1.

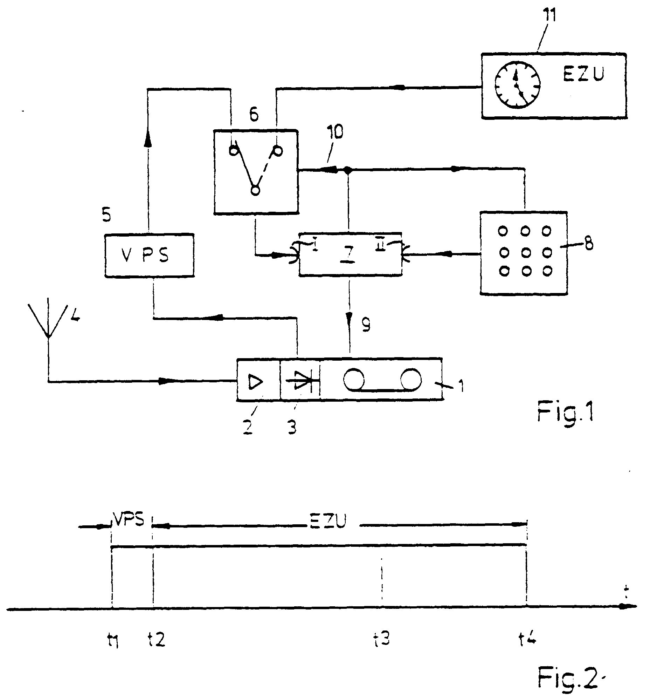

Ein in Fig. 1 dargestellter Videorecorder 1, der unter anderem ein HF-Eingangsteil 2 und einen Decoder 3 aufweist, ist an eine Antenne 4 angeschlossen. Der Decoder 3 liefert ein Signal an eine VPS-Schaltung 5, die das VPS-Signal auswertet und über einen Umschalter 6 in der dargestellten Schalterstellung einem Eingang I einer Vergleichsstufe 7 zuführt.

Die Daten eines aufzuzeichnenden Sendebeitrages, wie insbesondere Woche, Tag, Soll-Startzeit, Kanal sind manuell über ein Bedienfeld 8 eingebbar, das an einen zweiten Eingang II der Vergleichsstufe 7 angeschlossen ist.

Die soweit beschriebene Schaltung dient zum sendergesteuerten Ein- und Ausschalten des Videorecorder-Aufzeichnungsbetriebes mittels des den gewünschten Sendebeitrag charakterisierenden Kennsignals. Wenn der in das Bedienfeld 8 eingegebene Sendebeitrag mit dem zugehörigen Kennsignal erscheint, wird in der Vergleichsstufe 7 ein Übereinstimmen zwischen den manuell eingegebenen Daten und den über die VPS-Schaltung 5 zugeführten entsprechenden Daten des Kennsignals festgestellt, worauf von der Vergleichsstufe 7 über eine Steuerleitung 9 der Aufzeichnungsbetrieb des Videorecorders 1 eingeschaltet wird.

Unmittelbar oder kurz - z.B. einige Sekunden - nach diesem Einschalten gibt die Vergleichsstufe 7 über eine Leitung 10 ein den Umschalter 6 betätigendes Steuersignal ab, wodurch dieser in die gestrichelt dargestellte Schalterposition umschaltet. Hierdurch wird der Eingang I der Vergleichsschaltung 7 von der VPS-Schaltung 5 getrennt und an einen ein Zeitsignal abgebenden Ausgang einer Schaltung 11 gelegt, die eine Echtzeituhr EZU enthält.

In der Vergleichsstufe 7 werden jetzt die über das Bedienfeld 8 eingegebenen Daten nicht mehr mit den entsprechenden Daten eines VPS-Signals, sondern mit denen der Echtzeituhr EZU verglichen. Das VPS-Signal hat jetzt auf die Betriebsart des Videorecorders 1 keinen Einfluß mehr. Diese Betriebsart mit sogenanntem zeitgesteuerten Betrieb wird jetzt aufrechterhalten in Abhängigkeit von einer in das Bedienfeld 8 eingegebenen Zeit. Die Abschaltung des Recorders 1 erfolgt dann zu einem Zeitpunkt t4, z.B. auch Ablauf der Soll-Zeitdauer des Aufzeichnungsauftrages, zum Soll-Endzeitpunkt des Aufzeichnungsauftrages oder zu einem beliebig wählbaren Zeitpunkt. Die genannten Zeitpunkte können jeweils vorher, beispielsweise im Rahmen des Aufzeichnungsauftrages, manuell in das Bedienfeld 8 eingegeben werden.

Der Zeitpunkt t4 kann auch durch Addieren der Differenz aus einer programmierten Stop-Sollzeit B und einer programmierten Start-Sollzeit A zu einer tatsächlichen Startzeit A' des betreffenden Aufzeichnungsauftrages, also gemäß der Formel t4 = A' + B - A, ermittelt werden. Das Durchführen dieser Berechnung und Vergleichen mit der aktuellen Echtzeit kann etwa in der Vergleichsstufe 7 vorgesehen sein.

Trat im Verlauf des Sendebeitrages eine Unterbrechung des Sendebeitrages auf - eine solche wird bei senderseitig erfolgenden Unterbrechungen, beispielsweise bei in die Halbzeit-Pause einer Fußballspiel-Übertragung eingeschobener Nachrichtensendung, durch Ausstrahlen eines als Unterbrechungscode bezeichneten Kennsignals markiert- , so kann die Zeitdauer einer solchen Unterbrechung zusätzlich zu der gemäß vorstehend erwähnten Formel errechneten Uhrzeit addiert werden, um den Zeitpunkt t4 unter Berücksichtigung der Unterbrechung zu ermitteln.

Fig. 2 zeigt den zeitlichen Ablauf. Bis zu einem Zeitpunkt t1 ist der Aufzeichnungsbetrieb des Recorders 1 abgeschaltet. Im Zeitpunkt t1 wird in der Vergleichsstufe 7 Übereinstimmung zwischen den über das Bedienfeld 8 eingegebenen Daten und den entsprechenden Daten des empfangenen VPS-Kennsignals festgestellt und über die Leitung 9 der Aufzeichnungsbetrieb des Recorders 1 eingeschaltet. Dieses Einschalten erfolgt deswegen in sendergesteuerter Betriebsart, weil es nicht zwangsläufig von einer vorgebbaren Uhrzeit, sondern von einem vom Sender beeinflußten Ereignis, nämlich dem Beginn des Sendebeitrages abhängt.

In einem Zeitpunkt t2 kurz nach dem Zeitpunkt t1 wird mit dem Umschalter 6 auf zeitgesteuerte Betriebsart durch die Echtzeituhr EZU umgeschaltet. Mag nun zu einem späteren Zeitpunkt t3 während des noch laufenden Aufzeichnungsbetriebes das empfangene VPS-Kennsignal für den laufenden Sendebeitrag gestört sein oder ausgefallen, so wird doch der eingeschaltete Aufzeichnungsbetrieb nicht unterbrochen, denn es liegt ja nun schon zeitgesteuerte Aufzeichnungsbetriebsart vor. In einem Zeitpunkt t4, einem der oben zum zeitgesteuerten Abschalten beschriebenen Zeitpunkte, erfolgt schließlich das Abschalten des Aufzeichnungsbetriebes, unabhängig davon, ob und welches VPS-Kennsignal noch empfangen wird.

## Patentansprüche

1. Programmierbarer Audio- oder Videorecorder (1), dessen Aufzeichnungsbetrieb wahlweise zeitgesteuert oder durch ein einen Rundfunk-Sendebeitrag charakterisierendes Kennsignal steuerbar erfolgt, wobei das Einschalten des Aufzeichnungsbetriebes durch das Kennsignal erfolgt, mit einer Einrichtung (6, 7, 10) zum automatischen Umschalten auf die zeitgesteuerte Aufzeichnungsbetriebsart. **gekennzeichnet durch** eine derartige Ausbildung der Einrichtung (6, 7, 10), daß nach erfolgtem Einschalten des Aufzeichnungsbetriebes eine automatische Umschaltung auf die zeitgesteuerte Aufzeichnungsbetriebsart bei noch vorhandenem, den Rundfunk-Sendebeitrag charakterisierendem Kennsignal vor dem Auftreten einer Störung desselben erfolgt.

2. Recorder nach Anspruch 1, **dadurch gekennzeichnet,** daß das Umschalten auf die zeitgesteuerte Aufzeichnungsbetriebsart unmittelbar oder einige Sekunden nach dem durch das Kennsignal erfolgenden Einschalten geschieht.

3. Recorder nach Anspruch 1 oder 2, **dadurch gekennzeichnet**, daß bei Vorliegen der zeitgesteuerten Aufzeichnungsbetriebsart das Ausschalten des Aufzeichnungsbetriebes zum programmierten Endzeitpunkt (t4) oder bei Ablauf der programmierten Soll-Zeitdauer des Aufzeichnungsauftrages erfolgt.

4. Recorder nach Anspruch 3, **dadurch gekennzeichnet**, daß die Soll-Zeitdauer des Aufzeichnungsauftrages automatisch durch Bilden der Differenz aus programmierter Stop- und programmierter Start-Uhrzeit des Aufzeichnungsauftrages ermittelt wird.

5. Recorder nach einem der Ansprüche 1 bis 4, **dadurch gekennzeichnet**, daß die tatsächliche Start-Uhrzeit des Aufzeichnungsbetriebes in einem Speicher gespeichert wird. hierzu die Soll-Zeitdauer des Aufzeichnungsauftrages und für den Fall einer erfolgten Unterbrechung des Sendebeitrages vorzugsweise eine dieser Unterbrechung entsprechende Zeitdauer addiert werden und die hieraus ermittelte Uhrzeit als tatsächliche Stop-Uhrzeit des Aufzeichnungsauftrages dient bei zu dieser Uhrzeit vorliegendem zeitgesteuertem Aufzeichnungsbetrieb.

6. Recorder nach einem der Ansprüche 1 bis 5, **dadurch gekennzeichnet**, daß bei Vorliegen der zeitgesteuerten Aufzeichungsbetriebsart und gleichzeitigem Fehlen einer programmierten Soll-Stopzeit des Aufzeichnungsauftrages der Aufzeichnungsbetrieb bis zum Erreichen des Endes des Aufzeichnungsträgers oder bis zum Erreichen der programmierten Soll-Startzeit des zeitlich nachfolgenden nächsten Aufzeichnungsauftrages erfolgt.

## Claims

1. A programmable audio or video recorder (1), the recording operation of which as desired may be time-controlled or may be controlled by an identification signal which characterises a broadcast transmission item, in which the recording operation is switched on by the identification signal, having a device (6, 7, 10) for automatically switching over to the time-controlled recording mode, **characterised** by such a design of the device (6,7,10) that after switching on the recording operation an automatical switch over to time-controlled recording mode is done before the occurrence of an interference of the identification signal, said identification signal characterising a broadcast transmission being still present.

2. A recorder according to claim 1, characterised in that the switch over to the time-controlled recording mode takes place immediately or a few seconds after switching on by the identification signal.

3. A recorder according to claims 1 or 2, characterised in that in the time-controlled recording mode the recording operation is switched of at the programmed finish point in time (t4) or at the expiry of the desired programmed time duration of the recording task.

4. A recorder according to claim 3, characterised in that the desired time duration of the recording task is determined automatically by forming the difference between the programmed stop and programmed start clock times of the recording task.

5. A recorder according to one of claims 1 to 4, characterised in that the actual start clock time of the recording operation is stored in a memory, and to this are added the desired time duration of the recording task and for the case of an ensuring interruption in the transmission item preferably a time duration corresponding to this interruption, and the resultant clock time serves as the actual stop clock time of the recording task when there is a time-controlled recording operation present at this clock time.

6. A recorder according to any one of claims 1 to 5, characterised in that in the time-controlled recording mode and in the simultaneous absence of a programmed desired stop time of the recording task, the recording operation occurs until the end of the recording medium is reached or until the programmed desired start time of the next-in-time recording task is reached.

## Revendications

1. Enregistreur son ou vidéo programmable (1) dont le mode enregistrement est réalisé au choix en pouvant être commandé par le temps ou par un signal d'identification qui caractérise une émission radiophonique, la mise en marche du mode enregistrement étant réalisée par le signal d'identification, avec un dispositif (6, 7, 10) pour une commutation automatique sur le mode d'enregistrement commandé par le temps, caractérisé en ce que le dispositif (6, 7, 10) est prévu de telle façon que suite à une mise en marche du mode d'enregistrement, une commutation automatique sur le mode d'enregistrement commandé par le temps est opérée alors que le signal d'identification qui caractérise l'émission radiophonique est encore présent avant qu'une perturbation de celui-ci ne survienne.

2. Enregistreur selon la revendication 1, caractérisé en ce que la commutation sur le mode d'enregistrement commandé par le temps se fait immédiatement ou quelques secondes après la mise en marche réalisée par le signal d'identification.

3. Enregistreur selon la revendication 1 ou 2, caractérisé en ce qu'en présence du mode d'enregistrement commandé par le temps, la mise hors circuit du mode d'enregistrement est réalisée au moment final programmé ou après déroulement de la durée théorique programmée de l'émission à enregistrer.

4. Enregistreur selon la revendication 3, caractérisé en ce que la durée théorique de l'émission à enregistrer est déterminée automatiquement en formant la différence entre l'heure d'arrêt programmée et l'heure de début programmée de l'émission à enregistrer.

5. Enregistreur selon l'une des revendications 1 à 4, caractérisé en ce que l'heure de début effective de l'émission à enregistrer est mémorisée dans une mémoire, qu'il lui est ajouté la durée théorique de l'émission à enregistrer et, dans le cas d'une interruption de l'émission qui a eu lieu, de préférence une durée qui correspond à cette interruption et que l'heure qui est ainsi déterminée sert d'heure d'arrêt effective de l'émission à enregistrer en mode d'enregistrement commandé par le temps en présence duquel on est à cette heure précise.

6. Enregistreur selon l'une des revendications 1 à 5, caractérisé en ce qu'en présence du mode d'enregistrement commandé par le temps et en l'absence simultanée d'un temps d'arrêt théorique programmé de l'émission à enregistrer, le mode d'enregistrement est réalisé jusqu'à ce que la fin du support d'enregistrement soit atteinte ou jusqu'à ce que l'heure de début théorique programmée de la prochaine émission à enregistrer qui suit dans le temps soit atteinte.
